# EUROPEAN PATENT SPECIFICATION

(11) **EP 1 739 929 B1**
(45) Date of publication and mention of the grant of the patent: **30.05.2012**
(21) Application number: 05291405.8
(22) Date of filing: 29.06.2005
(51) Int. Cl.: H04L 29/12

(54) **Method to forward downstream message and network unit realizing said method**
Verfahren zum Weiterleiten einer Abwärtsnachricht und Netzwerkeinheit zur Realisierung des Verfahrens
Procédé pour la retransmission d'un message aval et unité réseau pour l'implémentation de ce procédé

(43) Date of publication of application: 03.01.2007
(73) Proprietor: Alcatel Lucent, 75007 Paris (FR)
(72) Inventor: Reynders, Paul Theo Maria, 2100 Deurne (BE)
(74) Representative: Narmon, Gisèle Marie Thérèse

(56) References cited:
- WO-A-98/26530
- US-A- 6 073 178
- DROMS R: "Dynamic Host Configuration Protocol" IETF STANDARD, INTERNET ENGINEERING TASK FORCE, IETF, CH, March 1997 (1997-03), pages 1-45, XP015007915 ISSN: 0000-0003

## Description

The present invention relates to a method to forward a downstream message and a network unit realizing said method.

Such method and network units are already known in the art.

Indeed, during initialization phase a client can use different kind of protocols such as Bootstrap Protocol BOOTP or Dynamic Host Configuration Protocol DHCP to request and receive an Internet Protocol address, shortly called IP address, from a server.

In the event of e.g. a Dynamic Host Configuration Protocol, shortly called DHCP protocol, a request message, i.e. an upstream message, is broadcasted by a client towards different servers. Such a server should snoop all DHCP request messages that it sees on its network ports and at least one server should reply with a reply message, i.e. a downstream message, back to the client.

Since a client, during such an initialization phase, has no IP address yet, the client must use other ways to identify itself in the request message towards the different servers. Different possibilities are actually offered to provide an identification of a client. A few possibilities are here provided in the event when using the DHCP protocol:
a) a particular field of the DHCP protocol called the "chaddr-field" wherein the client hardware address is to be included; and
b) a particular field of the DHCP protocol called *"*Client Identifier option" of the IETF - Network Working Group - Request for Comments RFC2131, March 1997*.* Indeed, the DHCP protocol defines a new 'Client Identifier' option that is used to pass an explicit client identifier to a server. This 'Client Identifier' field is an opaque key, not to be interpreted by the server. For example, the 'Client Identifier' may contain a hardware address, identical to the contents of the 'chaddr' field, or it may contain another type of identifier, such as a Domain Name Server DNS name. The 'Client Identifier' chosen by a client must be unique to that client within the subnet to which the client is attached. If the client uses a 'client identifier' in one message, it must use that same identifier in all subsequent messages, to ensure that all servers correctly identify the client; and
c) a particular field of the DHCP protocol called the "DHCP Relay Agent Information Option" with reference Option 82 of the IETF - Network Working group - Request For Comments 3046, March 1997*, §3.1.* There the Agent Circuit ID Sub-option is described. This sub-option may be added by network units that terminate switched or permanent circuits. It encodes a local identifier for the circuit from which a client-to-server packet was received. It is intended for use by network units in relaying responses back to the proper circuit. Possible uses of this field includes:
   - Router interface number
   - Switching Hub port number
   - Remote Access Server port number
   - Frame Relay DLCI
   - ATM virtual circuit number
   - Cable Data virtual circuit number

Furthermore, servers may use the Agent Circuit ID Sub-option for IP and other parameter assignment policies. However, the Agent Circuit ID sub-option should be considered as an opaque value, with policies based on exact string matches only. This means that the server should not internally parse the Agent Circuit ID Sub-option.

It has to be explained that originally, such a server was attached to the same Local Area Network, LAN network, as the client. Nowadays, this is not always true anymore i.e. a server and a client might be attached to different LAN's. Indeed, for efficiency, a server is a centrally controlled device, and as such it is not always in the subnet of the client.

Between a client and a server, an intermediate network unit such as e.g. a Relay Agent, is positioned, that routes the broadcasted request messages from a client as unicast message to one or more servers based on e.g. a configured list of server IP addresses.

In the reverse direction, such a network unit cannot yet use the IP address of the client to forward the downstream message from the server to the client, since at this moment during initialization phase, the clients IP address is not available yet. So, the network unit is enabled to route a reply message from a server to a particular client based on one of the above described fields. Indeed, such above described field may be filled in by the client and learned by the network unit. This means that upon reception by the network unit of the upstream message, the network unit determines routing information that enables routing of a message, intended for the client, from the network unit to the client. This routing information is linked to the content of the actually used field for identification of the client. In the event when the network unit receives a downstream message, the downstream message is determined as a message intended for the client based upon the content of the returned field received from the server.

The network unit may also use such above described field in case the IP address of the client is already known, but the server has decided to broadcast a reply message e.g. to inform not only the client but also other servers.

In this way a known method to forward a downstream message for use by a network unit which is coupled between a client and at least one server, and whereby the downstream message is a reaction upon an upstream message transmitted by the client via the network unit towards at least the one server, comprises, upon reception by the network unit of the upstream message, determining routing information that enables routing of a message, intended for the client, from the network unit to the client. It has to be remarked that such a step comprises retrieving routing information from whatever fields of the upstream message that may contain useful routing information, or from whatever devices that may have passed the upstream message.

The published International Application under the Patent Cooperation Treaty PCT with International Publication Nubmer WO 98/26530 with the title "System, device and method for routing DHCP packets in a public Data Network" describes a system and method for routing DHCP packets in a public data network wherein a relay agent inserts a source identifier into DHCP request packets. A server extracts the source identifier from the DHCP request packets and inserts the information into DHCP response packets. The relay agent uses the information to determine a destination for the DHCP response packets.

However, these known methods are not always sufficient safe due to the following reasons:
a) the network unit needs that the chaddr-field (a), client hardware address field, uniquely identifies a client. This is often not the case in the event when the client has no Ethernet address, or when the interface between the client and network unit goes over e.g. Asynchronous Transfer Mode ATM and Universal Serial Bus USB instead of over Ethernet; and
b) a network unit is not always using the Client Identifier option (b) because it is not always filled in by the client or it is filled in with a string programmed by the operator in the host of the DHCP client. Indeed, the Circuit Identifier may be configured by the operator with an operator's proprietary value and format. In this case the intermediate network unit cannot parse the Circuit Identifier for routing information; and
c) the Agent Circuit ID Sub-option (c) may not be supported by the server, which means that it may be overwritten by the server in the reply message.

An object of the present invention is to provide a method to forward a downstream message and a network unit realizing such a method, such as the above-described methods and network units but that provides an improved performance and does not require particular configuration data nor have dependencies on the setting of any of the above-described fields.

According to the invention, this object is achieved with the method to forward a downstream message according to claim 1 and the network unit according to claim 7.

Indeed, the method to forward a downstream message that is realized by the network unit according to the present invention comprises therefore the following steps:
upon reception by the network unit of the upstream message:
   - retrieving, by means of a first retrieving means, from an upstream transaction field of the upstream message a transaction value that is inserted by the client; and
   - storing the transaction value in a storing means in relation to a pointer value and in relation to the above determined routing information; and
   - inserting by means of first inserting means the pointer value in the upstream transaction field; and
   - by the server returning a value of the upstream transaction field in a downstream transaction field of the downstream message; and
upon reception by the network unit of the downstream message:
   - retrieving by means of a second retrieving means from the downstream transaction field the value being accomplished with the pointer value and furthermore, based upon the pointer value retrieving the transaction value and the downstream routing information from the storing means and thereby determining the downstream message as a message intended for the client; and
   - inserting by means of second inserting means the transaction value in the downstream transaction field; and
   - forwarding by means of a forwarder the downstream message towards the client based upon the routing information.

In this way, in upstream direction, the network unit replaces the value of a known transaction field of the upstream message, being inserted by the client, with a pointer value. In a storing means the network unit caches all information it needs for the reply downstream message to restore this transaction field and to route this downstream message to the client i.e. the routing information, the original value of the transaction field and the pointer value. Due to the mandatory procedure that the server returns the value of the transaction field unchanged in the downstream messages, the network unit is enabled to restore indeed the pointer value from the transaction field and to route properly the downstream message to the client. Since the network unit replaces the original value of the transaction field the client doesn't see that the network unit has replaced the transaction value of the transaction field.

It has to be remarked that the present method is not only for use for a Relay Agent (as provided as an example above), but might as well be used by other intermediate devices such as an access multiplexer, a router, a gateway, ... This means that any intermediate network unit being coupled between a plurality of clients and a plurality of servers can as well take advantage of the use of this method.

A convenient implementation of the transaction field is that, the transaction field is a field wherefore the transaction value is inserted by the client to associate its upstream message to the to be received downstream message. Indeed, for such a transaction field the requirement for the server to return the value of this field unchanged is already mandatory. This is described in claim 2.

Furthermore, it has to be explained that such a transaction field is available in the Dynamic Host Configuration Protocol. This field is called the Transaction ID field which is a random number chosen by the client, used by the client and server to associate messages and responses between client and server. This is described in claim 3. According to such an implementation it becomes clearer why the replacement steps of the transaction value with the pointer value is introduced in the present invention.

A first reason is that a value for a transaction field might be in use by different clients at the same moment. This is explained by means of an example. For some types of set-up boxes, a counter being hardcoded with a "random" start value generates such a transaction value. For different clients with each a set-top box of such a type of set-top box, the set-top box will generate a same "random" start value whereby this same number will be inserted in the transaction field of the respective upstream message. The Network Unit receives in this way an identical value for two different upstream messages of different clients.

A second reason why the replacement of the transaction value with the pointer value is important, is that such a transaction value consists of 32 bits whereas such a pointer value can be implemented with e.g. only 11 bits.

Furthermore, it has to be explained that a possible implementation is that the method to forward a downstream message according to the present invention comprises a step of releasing the pointer value after having forwarded the downstream message towards said client. This is described in claim 4. Herein it is described that the entry in the storing means is removed from the network unit when the IP address of the client is learned. The entry is also removed when the server refuses the client's upstream message and the client must restart with a new upstream message.

A further implementation of this method is that it comprises a step of extending the pointer value with a counter value. Hereby the network unit is enabled to detect reception of an obsolete downstream message based upon the returned counter value whereby the network unit might deny further forwarding of the obsolete downstream message. This is described in claim 5. Indeed, due to the counter value that is associated to the pointer value, the network unit is enabled to add a large warp-around counter to the entry in the storing means so that the network unit is able to detect and filter away reply messages that have been wandering in the network too long and that are of no use anymore for the client. In fact the network unit protects itself against memory leakage caused by one or more entries that are never removed because downstream reply messages may be lost and caused by a client that may abort its session before receiving an IP address. The protection is the removal of the storing means entries that are timed-out. Indeed, this feature solves the following problem. In case of network congestion or routing problems, it may happen that a downstream reply message arrives at the network unit after having been in the network for a long time, and that this message has a pointer value that points to a storing means entry that in the meantime has been closed and reallocated to another client. Relaying this message to this client would be an error. So, the network unit recognizes this case by means of the extended entry in the storing means with a large wrap-around counter. As such, the probability that a message is incorrectly relayed to a client is minimized. The network unit is enabled to detect such messages, to correctly discard them, and to keep statistics about such messages. These statistics can be used to detect network problems. This means that a storing means entry is generated by the network unit and comprises the following fields:
- the transaction value created by the client; and
- the pointer value; and
- a counter value: a number incremented every time the client launches a new transaction value.

It has to be remarked that a client may use more than one transaction value during the same initialization session. But then the downstream reply messages with the transaction value that does not match the transaction value of the most recent upstream request message must be silently discarded by the client or by the network unit.

A final possible implementation is that the step of storing the transaction value in the storing means comprises overwriting a previous transaction value with said transaction value, said previous transaction value being previously inserted by said client at an upstream transaction field of a previously transmitted upstream message of said client. This is described in claim 6. Such an implementation has the advantage that the required memory for a predetermined number of clients, might be kept limited.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

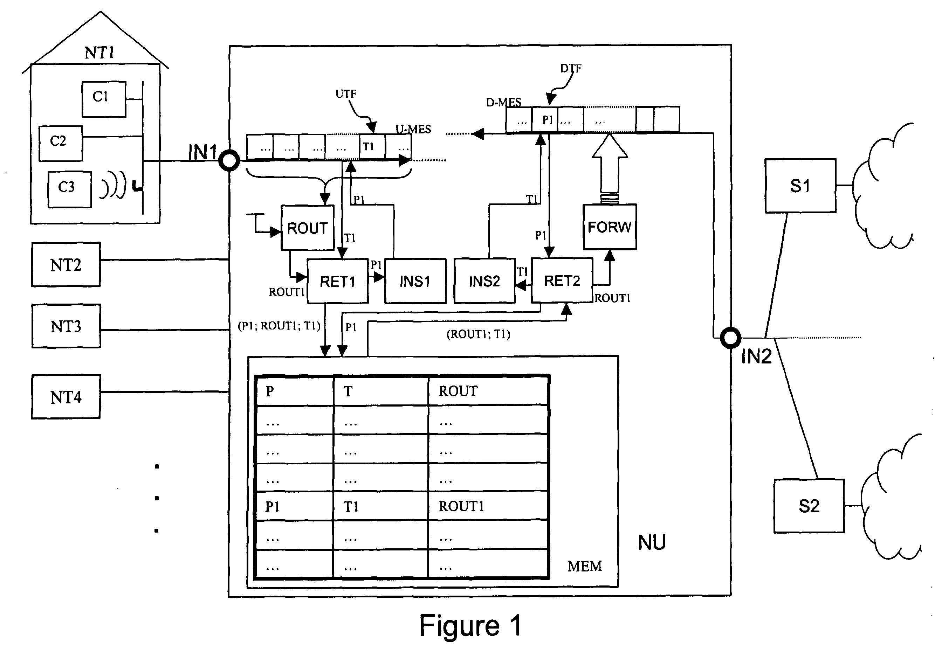

The above and other objects and features of the invention will become more apparent and the invention itself will be best understood by referring to the following description of an embodiment taken in conjunction with the accompanying drawings wherein Figure 1 represents an access network.

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method to forward a downstream message will be described in further detail.

The access network of Figure 1 comprises a network unit NU that is coupled between at least one client and at least one server. In order not to overload the figure a network terminal NT1 is shown that comprises three clients C1, C2 and C3. Furthermore, other network terminals NT2, NT3, NT4, ... are shown which are similar to the above kind of network terminal NT1 but which are not described in further detail. For a same reason, only server S1 and server S2 are shown. But it has to be understood that more than these two servers can be reached via the network unit NU.

The network unit NU comprises:
- a routing determiner ROUT coupled via a first input IN1 of the network unit to at least the client C1 of the network terminal NT1;
- a first retriever RET1 coupled to the routing determiner ROUT and to the first input; and
- a memory MEM i.e. a storing means that is coupled to the first retriever RET1; and
- a first inserter INS1 that is coupled to the first retriever RET1 and the first input IN1 of the network unit NU; and
- a second retriever RET2 coupled to the memory MEM and to at least server S1 via a second input IN2 of the network unit NU; and
- a second inserter INS2 coupled to the second retriever RET2 and to this second input IN2; and
- a forwarder FORW coupled to the second retriever RET2 and the second input IN2.

To explain more in detail the present invention it is preferred to describe a preferred embodiment with an access network wherein the network terminals communicate with the different servers, e.g. during initialization phase to acquire its IP address, according to the DHCP protocol.

However, other kinds of protocols can be used to implement the present invention e.g. the Bootstrap Protocol (BOOTP) or the Point-to-point Prtocol over Ethernet PPPoE cross-connect.

A possible use of the method to forward a downstream message is, in the event of the transmission of the DHCPDISCOVER message that is linked with the reaction upon this upstream message with the transmission of a DHCPOFFER. In such a situation the upstream message U-MES is implemented with the DHCPDISCOVER message and the downstream message D-MES is implemented with the DHCPOFFER message. However, it has to be explained that other upstream / downstream messages can as well take advantage of the method according to the present invention e.g. DHCPREQUEST / DHCPACK or DHCPREQUEST / DHCPNAK for DHCP protocol or PADI / PADO for PPPoE cross-connect.

The method of the present invention and the network unit realizing this method will now be described for client C1 that desires to get access to the Internet. Hereby an Internet address should be provided to client C1. Therefore client C1 transmits a DHSPCDISCOVER message i.e. U-MES. One of the predefined fields in this message is the transaction i.e. herein called upstream transaction field UTF. The client C1 generates a transaction value T1 and inserts this value in the transaction field UTF before transmission of the message.

Upon reception of the upstream message U-MES by the network unit NU at one of its inputs i.e. IN1 different functions has to be fulfilled:
- upon reception of the upstream message U-MES the routing determiner ROUT of the network unit NU determines routing information ROUT1. This routing information is as such that it enables routing of a message, intended for the client C1, from the network unit NU to this client C1. Such routing information comprises e.g. the physical port reference, a logical port reference, a VLAN identifier, an identification of the client for its network terminal NT1, .... i.e. all required information to route a downstream message to a client once this client is uniquely identified. This routing information ROUT1 is provided to the first retriever RET1 of the network unit NU; and

- the first retriever RET1 retrieves from the upstream transaction field UTF of the upstream message U-MES the transaction value T1; and
- the first retriever RET1 determines furthermore a pointer value P1 for the upstream message U-MES of client C1 and provides this pointer value P1 to the first inserter INS1; and
- the first retriever RET1 applies furthermore the transaction value T1, the pointer value P1 and the routing information ROUT1 to the memory MEM whereby the memory MEM generates an entry to store this applied information linked to each other i.e. the memory MEM stores the transaction value T1 in relation to the pointer value P1 and in relation to the routing information ROUT1; and
- the first inserter INS1 finally inserts the pointer value P1 in the upstream transaction field UTF of the upstream message U-MES. The first inserter INS1 overwrites hereby in fact the transaction value T1.

So, when relaying an upstream message U-MES, the network unit NU overwrites the transaction value T1 generated by the client C1 with a system-generated pointer value P1 that is a pointer to the transaction value T1 and the routing information ROUT1.

After completion of these functions the upstream message U-MES is further transmitted towards the different servers i.e. S1, S2 and others.

Presume the situation whereby the fist server S1 provides a reaction upon this upstream message U-MES. This means that server S1 generates a DHCPOFFER message i.e. the downstream message D-MES. Whilst generating the downstream message D-MES, the first server S1 respects the value of the transaction field. This means that the value of the upstream transaction field i.e. P1 is returned in the downstream transaction field DTF of the downstream message D-MES. So, when the network unit NU receives the downstream message D-MES, to forward this downstream message D-MES towards one of its clients, the transaction field comprises the value P1. In order to find out to which client the downstream message D-MES is to be forwarded, the network unit NU executes the following functions according to the present invention:
- the second retriever RET2 retrieves from the received downstream transaction field DTF its value. This value, the pointer value P1, is used by the second retriever RET2 to retrieve the associated transaction value T1, and said downstream routing information ROUT1 from the storing means MEM. Hereby the downstream message D-MES is determined as a message intended for the client C1. The transaction value T1 is provide to the second inserter INS2 and the routing information ROUT1 is provided by the second retriever RET2 to the forwarder FORW; and
- the second inserter INS2 inserts the transaction value T1 in the downstream transaction field DTF of the downstream message D-MES; and
- a forwarder FORW forwards the downstream message D-MES towards the client C1 based upon the routing information ROUT1.

So, for relaying downstream the reply messages, the network unit uses the transaction field of the downstream message, to find the routing information ROUT1, and uses this routing information to find the route to the client C1. But since the client C1 expects to see its transaction value T1 back, before the sending of the downstream message D-MES, the network unit NU restores the original value of the transaction field. This is the reason wherefore the original client's transaction value T1 is cached in the memory MEM at the network unit NU.

It has to be remarked that the entry for the transaction value T1 is removed from the memory MEM when the IP address of the client C1 is learned. The entry is also removed when the server S1 refuses the client's request and the client C1 must restart with another DHCPREQUEST or DHCPDISCOVER.

The Network Unit NU shall protect itself against memory leakage caused by one or more contexts that are never removed because reply messages may be lost and caused by a client that may abort its session before receiving an IP address. The protection shall be the removal of the memory entries that are timed-out.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for use by a network unit (NU) coupled between a client (C1) and at least one server (S1), to forward a downstream message (D-MES) from said server (S1) towards said client (C1), said downstream message (D-MES) being a reaction upon an upstream message (U-MES) transmitted by said client (C1) via said network unit (NU) towards at least said one server (S1), said method comprises communicating between said client (C1), network unit (NU) and server (S1) according to the Dynamic Host Configuration Protocol; and upon reception by said network unit (NU) of said upstream message (U-MES), determining routing information (ROUT1) that enables routing of a message, intended for said client (C1), from said network unit (NU) to said client (C1), said method further comprising the steps of:
by said network unit (NU) upon reception of said upstream message (U-MES): said upstream message
- retrieving from an upstream transaction ID field (UTF) of said upstream message (U-MES) a transaction value (T1) being inserted by said client (C1); and
- storing said transaction value (T1) in a storing means (MEM) in relation to a pointer value (P1) and in relation to said routing information (ROUT1); and
- inserting said pointer value (P1) in said upstream transaction ID field (UTF) by overwritting said transaction value (T1); and
- by said server (S1) returning the value of said upstream transaction ID field (UTF) in a downstream transaction ID field (DTF) of said downstream message (D-MES); and
- by said network unit (NU) upon reception of said downstream message (D-MES)
- retrieving from said downstream transaction ID field (DTF) said pointer value (P1); and
- based upon said pointer value (P1) retrieving said transaction value (T1) and said downstream routing information (ROUT1) from said storing means (MEM) and thereby determining said downstream message (D-MES) as a message intended for said client (C1); and
- inserting said transaction value (T1) in said downstream transaction ID field (DTF); and
- forwarding said downstream message (D-MES) towards said client (C1) based upon said routing information (ROUT1).

2. The method according to claim 1, **characterized in that** said transaction value being inserted by said client to associate said downstream message (D-MES) to said upstream message (U-MES).

3. The method according to claim 1, **characterized in that** said method further comprises a step of releasing said pointer value after having forwarded said downstream message (D-MES) towards said client.

4. The method according to claim 1, **characterized in that** said method further comprises a step of extending said pointer value with a counter value and thereby detecting by said network unit (NU) reception of an obsolete downstream message based upon said returned counter value and denying further forwarding of said obsolete downstream message.

5. The method according to claim 1, **characterized in that** said step of storing said transaction value in a storing means (MEM) comprises overwriting a previous transaction value (T1') with said transaction value (T1), said previous transaction value (T1') being previously inserted by said client (C1) at an upstream transaction ID field (UTF) of a previously transmitted upstream message of said client (C1).

6. Network unit (NU) coupled between a client (C1) and at least one server (S1) and communicating with said client (C1) and said at least one server (S1) according to the Dynamic Host Configuration Protocol; said network unit (NU) being enabledto forward a downstream message (D-MES) from said server (S1) towards a client (C1), said downstream message (D-MES) being a reaction upon an upstream message (U-MES) transmitted by said client (C1) via said network unit (NU) towards at least said one server (S1), said network unit (NU) comprises:
- a routing determiner (ROUT) configured to determine, upon reception by said network unit (NU) of said upstream message (U-MES), routing information (ROUT1) that enables routing of a message, intended for said client (C1), from said network unit (NU) to said client (C1), said network unit (NU) further comprising:
upon reception by said network unit (NU) of said upstream message (U-MES);
a first retrieving means (RET1) configured to retrieve from an upstream transaction ID field (UTF) of said upstream message (U-MES) a transaction value (T1) being inserted by said client (C1); and
- a storing means (MEM) configured to store said transaction value (T1) in relation to a pointer value (P1) and in relation to said routing information (ROUT1); and
- a first inserting means (INS1) configured to insert said pointer value (P1) in said upstream transaction ID field (UTF) by overwriting said transaction value (T1); and
upon reception by said network unit (NU) of said downstream message (D-MES) that comprises a downstream transaction ID field (DTF) which comprises the value of said upstream transaction ID field being returned by said server (S1),
- a second retrieving means (RET2) configured to retrieve from said downstream transaction ID field (DTF) said pointer value (P1) and to further, based upon said pointer value (P1), to retrieve said transaction value (T1) and said downstream routing information (ROUT1) from said storing means (MEM) and thereby determining said downstream message (D-MES) as a message intended for said client (C1); and
- a second inserting means (INS2) to insert said transaction value (T1) in said downstream transaction ID field (DTF); and
- a forwarding means (FORW) to forward said downstream message (D-MES) towards said client (C1) based upon said routing information (ROUT1).

## Patentansprüche

1. Verfahren zur Anwendung durch eine zwischen einem Client (C1) und mindestens einem Server (S1) angekoppelten Netzwerkeinheit (NU), zum Weiterleiten einer Downstream-Nachricht (D-MES) von dem besagten Server (S1) an den besagten Client (C1), wobei die besagte Downstream-Nachricht (D-MES) eine Reaktion auf eine von dem besagten Client (C1) über die besagte Netzwerkeinheit (NU) an mindestens den besagten einen Server (S1) übertragene Upstream-Nachricht (U-MES) ist, wobei das besagte Verfahren das Kommunizieren zwischen dem besagten Client (C1), der besagten Netzwerkeinheit (NU) und dem besagten Server (S1) nach Maßgabe des dynamischen Hostkonfigurationsprotokolls umfasst; und zum Ermitteln, nach Empfang der besagten Upstream-Nachricht (U-MES) an der besagten Netzwerkeinheit (NU), der Routing-Information (ROUT1), welche das Routen einer für den besagten Client (C1) bestimmten Nachricht von der besagten Netzwerkeinheit (NU) an den besagten Client (C1) ermöglicht,
wobei das besagte Verfahren die folgenden Schritte umfasst:
durch die besagte Netzwerkeinheit (NU) nach Empfang der besagten Upstream-Nachricht (U-MES):
- Abrufen, von einem Upstream-Transaktions-ID-Feld (UTF) der besagten Upstream-Nachricht (U-MES), eines durch den besagten Client (C1) eingefügten Transaktionswertes (T1); und
- Speichern, bezogen auf einen Zeigerwert (P1) und bezogen auf die besagte Routing-Information (ROUT1), des besagten Transaktionswertes (T1) in einem Speichermittel (MEM); und
- Einfügen des besagten Zeigerwertes (P1) in das besagte Upstream-Transaktions-ID-Feld (UTF) durch Überschreiben des besagten Transaktionswertes (T1), und
- durch den besagten Server (S1), Zurücksenden des Wertes des besagten Upstream-Transaktions-ID-Feldes (UTF) in ein Downstream-Transaktions-ID-Feld (DTF) der besagten Downstream-Nachricht (D-MES); und
durch die besagte Netzwerkeinheit (NU), nach Empfang der besagten Downstream-Nachricht (D-MES):
- Abrufen, in dem besagten Downstream-Transaktions-ID-Feld (DTF), des besagten Zeigerwertes (P1); und
- basierend auf dem besagten Zeigerwert (P1), Abrufen des besagten Transaktionswertes (T1) und der besagten Downstream-Routing-Information (ROUT1) in dem besagten Speichermittel (MEM) und damit Bestimmen der besagten Downstream-Nachricht (D-MES) als eine für den besagten Client (C1) bestimmte Nachricht; und
- Einfügen des besagten Transaktionswertes (T1) in das besagte Downstream-Transaktions-ID-Feld (DTF); und
- Weiterleiten der besagten Downstream-Nachricht (D-MES) an den besagten Client (C1) auf der Basis der besagten Routing-Information (ROUT1).

2. Verfahren nach Anspruch 1, **dadurch gekennzeichnet, dass** der besagte Transaktionswert durch den besagten Client eingefügt wird, um die besagte Downstream-Nachricht (D-MES) der besagten Upstream-Nachricht (U-MES) zuzuordnen.

3. Verfahren nach Anspruch 1, **dadurch gekennzeichnet, dass** das besagte Verfahren weiterhin einen Schritt des Freigebens des besagten Zeigerwertes, nachdem die besagte Downstream-Nachricht (D-MES) an den besagten Client weitergeleitet wurde, umfasst.

4. Verfahren nach Anspruch 1, **dadurch gekennzeichnet, dass** das besagte Verfahren weiterhin einen Schritt des Erweiterns des besagten Zeigerwertes mit einem Zählerwert und dabei des Erkennens, durch die besagte Netzwerkeinheit (NU), des Empfangs einer veralteten Downstream-Nachricht basierend auf dem besagten zurückgesendeten Zählerwert und der Verweigerung des weiteren Weiterleitens der besagten veralteten Downstream-Nachricht umfasst.

5. Verfahren nach Anspruch 1, **dadurch gekennzeichnet, dass** der besagte Schritt des Speicherns des besagten Transaktionswertes in einem Speichermittel (MEM) das Überschreiben eines vorherigen Transaktionswertes (T1') mit dem besagten Transaktionswert (T1) umfasst, wobei der besagte vorherige Transaktionswert (T1') vorher von dem besagten Client (C1) an einem Upstream-Transaktions-ID-Feld (UTF) einer zuvor übertragenen Upstream-Nachricht des besagten Client (C1) eingefügt wird.

6. Netzwerkeinheit (NU), welche zwischen einem Client (C1) und mindestens einem Server (S1) gekoppelt ist und mit dem besagten Client (C1) und dem besagten mindestens einen Server (S1) gemäß dem dynamischen Hostkonfigurationsprotokoll kommuniziert; wobei die besagte Netzwerkeinheit (NU) fähig ist, eine Downstream-Nachricht (D-MES) von dem besagten Server (S1) an einen Client (C1) weiterzuleiten, wobei die besagte Downstream-Nachricht (D-MES) eine Reaktion auf eine von dem besagten Client (C1) über die besagte Netzwerkeinheit (NU) an mindestens den besagten einen Server (S1) übertragene Upstream-Nachricht (U-MES) ist, wobei die besagte Netzwerkeinheit (NU) umfasst:
- Einen Routing-Bestimmer (ROUT), welcher dafür konfiguriert ist, nach Empfang, an der besagten Netzwerkeinheit (NU), der besagten Upstream-Nachricht (U-MES), eine Routing-Information (ROUT1) zu ermitteln, welche das Routen einer für den besagten Client (C1) bestimmten Nachricht von der besagten Netzwerkeinheit (NU) an den besagten Client (C1) ermöglicht, wobei die besagte Netzwerkeinheit (NU) weiterhin umfasst:
Nach Empfang der besagten Upstream-Nachricht (U-MES) an der besagten Netzwerkeinheit (NU):
- Ein erstes Abrufmittel (RET1), konfiguriert für das Abrufen, in einem Upstream-Transaktions-ID-Feld (UTF) der besagten Upstream-Nachricht (U-MES), eines durch den besagten Client (C1) eingefügten Transaktionswertes (T1); und
- ein Speichermittel (MEM), konfiguriert für das Speichern, bezogen auf einen Zeigerwert (P1) und bezogen auf die besagte Routing-Information (ROUT1), des besagten Transaktionswertes (T1); und
- ein erstes Einfügemittel (INS1), konfiguriert für das Einfügen des besagten Zeigerwertes (P1) in das besagte Upstream-Transaktions-ID-Feld (UTF) durch Überschreiben des besagten Transaktionswertes (T1), und
nach Empfang, an der besagten Netzwerkeinheit (NU), der besagten Downstream-Nachricht (D-MES), welche ein Downstream-Transaktions-IF-Feld (DTF) enthält, welches den Wert des besagten von dem besagten Server (S1) zurückgesendeten Upstream-Transaktions-ID-Feldes beinhaltet,
- ein zweites Abrufmittel (RET2), konfiguriert für das Abrufen, in dem besagten Downstream-Transaktions-ID-Feld (DTF), des besagten Zeigerwertes (P1), und weiterhin für das Abrufen, basierend auf dem besagten Zeigerwert (P1), des besagten Transaktionswertes (T1) und der besagten Downstream-Routing-Information (ROUT1) in dem besagten Speichermittel (MEM) und damit das Bestimmen der besagten Downstream-Nachricht (D-MES) als eine für den besagten Client (C1) bestimmte Nachricht; und
- ein zweites Einfügemittel (INS2) für das Einfügen des besagten Transaktionswertes (T1) in das besagte Downstream-Transaktions-ID-Feld (DTF); und
- ein Weiterleitungsmittel (FORW) zum Weiterleiten der besagten Downstream-Nachricht (D-MES) an den besagten Client (C1), basierend auf der besagten Routing-Information (ROUT1).

## Revendications

1. Procédé destiné à être utilisé par une unité de réseau (NU) couplée entre un client (C1) et au moins un serveur (S1), pour transférer un message aval (D-MES) depuis ledit serveur (S1) vers ledit client (C1), ledit message aval (D-MES) étant une réaction lorsqu'un message amont (U-MES) est transmis par ledit client (C1) par l'intermédiaire de ladite unité de réseau (NU) vers au moins ledit serveur (S1), ledit procédé comprenant la communication entre ledit client (C1), l'unité de réseau (NU) et le serveur (S1) conformément au protocole de configuration dynamique d'hôte ; et lors de la réception par ladite unité de réseau (NU) dudit message amont (U-MES), la détermination d'informations de routage (ROUT1) qui permettent le routage d'un message, destiné audit client (C1), depuis ladite unité de réseau (NU) vers ledit client (C1),
ledit procédé comprenant en outre les étapes suivantes :
lors de la réception par ladite unité de réseau (NU) dudit message amont (U-MES) :
- récupérer, à partir d'un champ d'identification de transaction amont (UTF) dudit message amont (U-MES), une valeur de transaction (T1) insérée par ledit client (C1) ; et
- stocker ladite valeur de transaction (T1) dans un moyen de stockage (MEM) par rapport à une valeur du pointeur (P1) et par rapport auxdites informations de routage (ROUT1) ; et
- insérer ladite valeur du pointeur (P1) dans ledit champ d'identification de transaction amont (UTF) en écrasant ladite valeur de transaction (T1), et
- par ledit serveur (S1), renvoyer la valeur dudit champ d'identification de transaction amont (UTF) dans un champ d'identification de transaction aval (DTF) dudit message aval (D-MES) ; et
lors de la réception par ladite unité de réseau (NU) dudit message aval (D-MES)
- récupérer ladite valeur du pointeur (P1) à partir dudit champ d'identification de transaction aval (DTF) ; et
- en fonction de ladite valeur du pointeur (P1), récupérer ladite valeur de transaction (T1) et lesdites informations de routage en aval (ROUT1) à partir dudit moyen de stockage (MEM), déterminant ainsi ledit message aval (D-MES) comme étant un message destiné audit client (C1) ; et
- insérer ladite valeur de transaction (T1) dans ledit champ d'identification de transaction aval (DTF) ; et
- transférer ledit message aval (D-MES) vers ledit client (C1) en fonction desdites informations de routage (ROUT1).

2. Procédé selon la revendication 1, **caractérisé en ce que** ladite valeur de transaction est insérée par ledit client pour associer ledit message aval (D-MES) audit message amont (U-MES).

3. Procédé selon la revendication 1, **caractérisé en ce que** ledit procédé comprend en outre une étape de libération de ladite valeur du pointeur après avoir transféré ledit message aval (D-MES) vers ledit client.

4. Procédé selon la revendication 1, **caractérisé en ce que** ledit procédé comprend en outre une étape d'extension de ladite valeur du pointeur avec une valeur de compteur, détectant ainsi, par ladite unité de réseau (NU), la réception d'un message aval obsolète en fonction de ladite valeur de compteur renvoyée et refusant un autre transfert dudit message aval obsolète.

5. Procédé selon la revendication 1, **caractérisé en ce que** ladite étape de stockage de ladite valeur de transaction dans un moyen de stockage (MEM) comprend l'écrasement d'une valeur de transaction précédente (T1') avec ladite valeur de transaction (T1), ladite valeur de transaction précédente (T1') étant préalablement insérée par ledit client (C1) dans un champ d'identification de transaction amont (UTF) d'un message amont précédemment transmis dudit client (C1).

6. Unité de réseau (NU) couplée entre un client (C1) et au moins un serveur (S1) et communiquant avec ledit client (C1) et ledit au moins un serveur (S1) conformément au protocole de configuration dynamique d'hôte ; ladite unité de réseau (NU) pouvant transférer un message aval (D-MES) depuis ledit serveur (S1) vers un client (C1), ledit message aval (D-MES) étant une réaction lorsqu'un un message amont (U-MES) est transmis par ledit client (C1) par l'intermédiaire de ladite unité de réseau (NU) vers au moins ledit serveur (S1), ladite unité de réseau (NU) comprenant :
- un déterminant de routage (ROUT) configuré pour déterminer, lors de la réception par ladite unité de réseau (NU) dudit message amont (U-MES), des informations de routage (ROUT1) qui permettent le routage d'un message, destiné audit client (C1), depuis ladite unité de réseau (NU) vers ledit client (C1), ladite unité de réseau (NU) comprenant en outre :
lors de la réception par ladite unité de réseau (NU) dudit message amont (U-MES) :
- un premier moyen de récupération (RET1) configuré pour récupérer, à partir d'un champ d'identification de transaction amont (UTF) dudit message amont (U-MES), une valeur de transaction (T1) insérée par ledit client (C1) ; et
- un moyen de stockage (MEM) configuré pour stocker ladite valeur de transaction (T1) par rapport à une valeur du pointeur (P1) et par rapport auxdites informations de routage (ROUT1) ; et
- un premier moyen d'insertion (INS1) configuré pour insérer ladite valeur du pointeur (P1) dans ledit champ d'identification de transaction amont (UTF) en écrasant ladite valeur de transaction (T1) ; et
lors de la réception par ladite unité de réseau (NU) dudit message aval (D-MES) qui comprend un champ d'identification de transaction aval (DTF) qui comprend la valeur dudit champ d'identification de transaction amont renvoyée par ledit serveur (S1),
- un deuxième moyen de récupération (RET2) configuré pour récupérer à partir dudit champ d'identification de transaction aval (DTF) ladite valeur du pointeur (P1) et en outre, en fonction de ladite valeur du pointeur (P1), pour récupérer ladite valeur de transaction (T1) et lesdites informations de routage en aval (ROUT1) à partir dudit moyen de stockage (MEM), déterminant ainsi ledit message aval (D-MES) comme étant un message destiné audit client (C1) ; et
- un deuxième moyen d'insertion (INS2) pour insérer ladite valeur de transaction (T1) dans ledit champ d'identification de transaction aval (DTF) ; et
- un moyen de transfert (FORW) pour transférer ledit message aval (D-MES) vers ledit client (C1) en fonction desdites informations de routage (ROUT1).
